# EUROPÄISCHE PATENTSCHRIFT

(11) **EP 1 525 066 B1**
(45) Veröffentlichungstag und Bekanntmachung des Hinweises auf die Patenterteilung: **13.09.2006**
(21) Anmeldenummer: 03740481.1
(22) Anmeldetag: 26.07.2003
(51) Int. Cl.: B23B 51/04

(54) **VOLLBOHRER FÜR WERKZEUGMASCHINEN**
SOLID DRILL BIT FOR MACHINE TOOLS
FORET SOLIDE POUR MACHINES-OUTILS

(30) Priorität: 02.08.2002 DE 10235606
(43) Veröffentlichungstag der Anmeldung: 27.04.2005
(73) Patentinhaber: KOMET GROUP Holding GmbH, 74354 Besigheim (DE)
(72) Erfinder: KRUSZYNSKI, Jacek, 70190 Stuttgart (DE); KRAUSE, Alexander, 74336 Brackenheim (DE); SCHÜTT, Henry, 74343 Sachsenheim (DE)
(74) Vertreter: Wolf, Eckhard
(86) Internationale Anmeldenummer: PCT/EP2003/008321
(87) Internationale Veröffentlichungsnummer: WO 2004/014588

(56) Entgegenhaltungen:
- WO-A-01/85375
- US-A- 5 800 100
- US-A- 5 947 650

## Beschreibung

Die Erfindung betrifft einen Vollbohrer für Werkzeugmaschinen mit einem Bohrerkörper und mindestens zwei in radialem Abstand voneinander in je einem Plattensitz des Bohrerkörpers im Bereich einer Spanfördernut angeordneten, mit ihren stirnseitigen Hauptschneiden axial über den Bohrerkörper überstehenden und in ihren Wirkbereichen einander radial überlappenden Schneidplatten, wobei die radial äußerste Schneidplatte mit ihrer äußeren, durchmesserbildenden Plattenecke und ihrer daran anschließenden Nebenschneide radial über den Bohrerkörper übersteht und wobei die Nebenschneide von der Plattenecke aus in ihrer Längserstreckung über einen definierten Anstellwinkel in Richtung Bohrerkörper geneigt ist (siehe US 5 800 100).

Bohrwerkzeuge dieser Art mit zwei im Wesentlichen quadratischen Umsetzschneidplatten sind bekannt (WO01/85375). Die beiden quadratischen Schneidplatten sind in unterschiedlichen radialen Abständen voneinander angeordnet. Sie stehen mit ihren stirnseitigen Hauptschneiden mit positivem Spanwinkel axial über den Bohrerkörper über. In axialer Richtung ist die innere Platte vorschneidend, wobei der Abstand etwa dem Krümmungsradius im Bereich der Plattenecken entspricht. Die Neigung der Nebenschneide der äußersten Schneidenplatte ist mit weniger als 3,2° so gewählt, dass die Nebenschneide eine Führungskante bildet, die beim Bohrvorgang unter der Einwirkung einer radial nach außen weisenden Abdrängkraft zumindest über einen Teil ihrer Länge gegen die Wand der zuvor erzeugten Bohrung gleitend anliegt. Beim Durchbohren von Werkstücken aus duktilem Material unter Verwendung derartiger Vollbohrer hat es sich gezeigt, dass aus der Bohrung im Radiusbereich ein stehender Grat geformt wird, der oft nachträglich entfernt werden muss. Auch beim Anbohren mit einem solchen Vollbohrer treten Grate auf. Versuche haben gezeigt, dass auch durch Verwendung von Schneidplatten mit abgerundeten Plattenecken eine Gratbildung nicht vermieden werden kann.

Ausgehend hiervon liegt der Erfindung die Aufgabe zugrunde, den bekannten Vollbohrer und seine Schneidplatten dahingehend zu verbessern, dass auch bei Werkstücken aus duktilem Material ein gratfreies Durchbohren möglich ist.

Zur Lösung dieser Aufgabe werden die in den Patentansprüchen 1 und 9 angegebenen Merkmalskombinationen vorgeschlagen. Vorteilhafte Ausgestaltungen und Weiterbildungen der Erfindung ergeben sich aus den abhängigen Ansprüchen.

Der erfindungsgemäßen Lösung liegt der Gedanke zugrunde, die Hauptschneide so auszubilden, dass ein sich im Durchmesserbereich der Bohrung bildender Grat nach Art eines Schäl- oder Reibvorgangs zerspant werden kann. Um dies zu erreichen, wird gemäß der Erfindung vorgeschlagen, dass die stirnseitige Hauptschneide der äußeren Schneidplatte in ihrer Längserstreckung in eine radial innen liegende Arbeitspartie und eine daran nach außen anschließende, bis zur äußeren Plattenecke reichende geradlinige Schälpartie unterteilt ist, die einen Winkel von 95° bis 120° miteinander einschließen. Während des Bohrvorgangs eilt die Arbeitspartie vor, während die Schälpartie im Durchmesserbereich mit einem steilen Schälwinkel nachgeführt ist. Dadurch wird das Werkstück in der Nähe des Durchmesserbereichs je nach Steilheit des Anstellwinkels in mehr oder weniger feine Randspäne zerteilt, so dass eine Gratbildung vermieden wird.

Eine bevorzugte Ausgestaltung der Erfindung sieht vor, dass die Arbeitspartie der Hauptschneide zur Schälpartie hin unter einem positiven Anstellwinkel von 2° bis 10° gegenüber der gedachten, zur Bohrerachse senkrechten Stirnfläche des Bohrerkörpers angestellt ist, während die Schälpartie der Hauptschneide zur äußeren Plattenecke hin unter einem positiven Anstellwinkel von 72° bis 87° gegenüber der Stirnfläche des Bohrerkörpers angestellt ist. Die Übergangsstelle zwischen Arbeitspartie und Schälpartie der Hauptschneide kann konvex abgerundet sein. Die äußere Plattenecke sollte dagegen relativ scharfkantig ausgebildet sein. Im Bereich der äußeren Plattenecke schließen die Schälpartie der Hauptschneide und die benachbarte Nebenschneide einen Winkel von 160° bis 175° miteinander ein, wobei die Nebenschneide im Sinne der WO01/85375 zweckmäßig mit einem Anstellwinkel von weniger als 3,2° in Richtung Bohrerkörper geneigt ist.

Eine weitere vorteilhafte Ausgestaltung der Erfindung sieht vor, dass sich an die vorzugsweise geradlinige Arbeitspartie der stimseitigen Hauptschneide radial nach innen hin eine bis zur inneren Plattenecke reichende Zentralpartie anschließt, die mit der Arbeitspartie einen Pfeilwinkel von 160° bis 175° einschließt und die unter einem negativen Anstellwinkel von 3° bis 18° gegenüber der Stirnfläche des Bohrerkörpers angestellt ist. Der Wirkungsbereich der Zentralpartie der stimseitigen Hauptschneide der äußeren Schneidplatte wird zweckmäßig von der stirnseitigen Hauptschneide der inneren Schneidplatte überlappt. Dies ist deshalb wichtig, weil die Schneidplatten vorzugsweise als Umsetzschneidplatten mit vier gleichartigen Hauptschneiden ausgebildet sind, wobei bei einem Umsetzvorgang die Zentralpartie einer ersten Hauptschneide zur Schälpartie einer benachbarten Hauptschneide umfunktioniert wird. Es ist daher wichtig, dass die Zentralpartie der äußeren Schneidplatte beim Bohrbetrieb verschleißfrei bleibt.

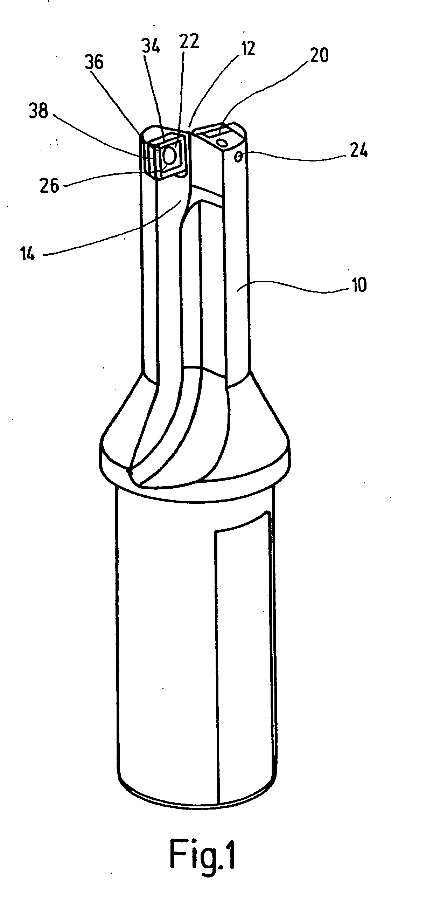

Im Folgenden wird die Erfindung anhand eines in der Zeichnung in schematischer Weise dargestellten Ausführungsbeispiels näher erläutert. Es zeigen
- Fig. 1: einen Vollbohrer für Werkzeugmaschinen mit im Wesentlichen quadratischen Umsetzschneidplatten in schaubildlicher Darstellung;
- Fig. 2a: bis c eine Draufsicht und zwei ausschnittsweise Seitenansichten des Vollbohrers nach Fig. 1;
- Fig. 3: eine Draufsicht auf eine Umsetzschneidplatte in vergrößerter Darstellung;
- Fig. 4a: und b zwei Schnittdarstellungen entlang den Schnittlinien A-A und B-B der Fig. 3.

Das in der Zeichnung dargestellte Werkzeug ist als Vollbohrer für Werkzeugmaschinen bestimmt. Es weist einen im Wesentlichen zylindrischen Bohrerkörper 10 auf, der mit zwei Spanfördemuten 12,14 versehen ist. Am stirnseitigen Ende der Spanfördernuten ist je ein Plattensitz 16,18 zur Aufnahme einer im Wesentlichen quadratischen Umsetzschneidplatte 20,22 vorgesehen. Die Umsetzschneidplatten 20,22 sind mit je einer in eine Gewindebohrung 24 des Bohrerkörpers 10 eingreifenden Senkkopfschraube 26 am Bohrerkörper 10 befestigt.

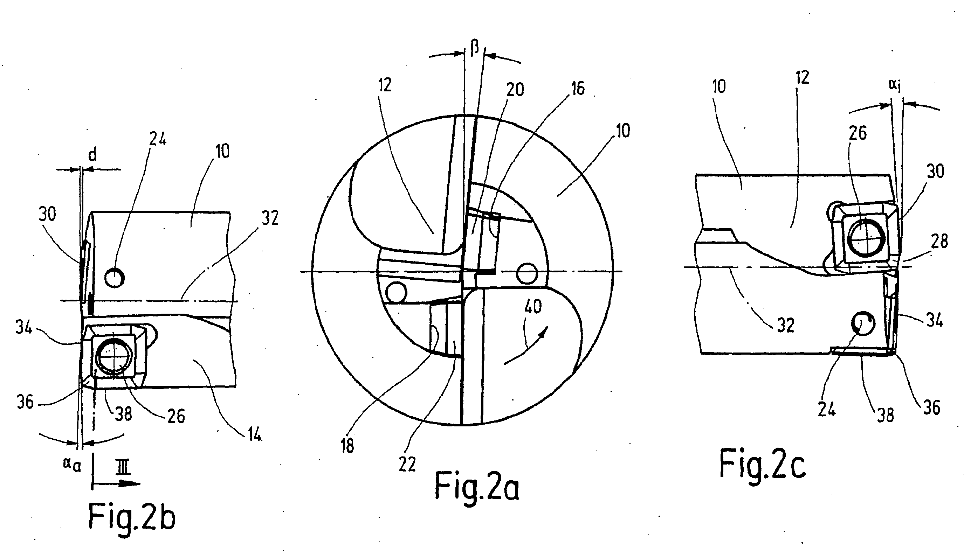

Wie aus Fig. 2a bis c zu ersehen ist, übergreift die innere Umsetzschneidplatte 20 mit der inneren Plattenecke 28 an ihrer stimseitigen Hauptschneide 30 die Bohrerachse 32, während die äußere Umsetzschneidplatte 22 mit ihrer Hauptschneide 34 im Bereich der äußeren Plattenecke 36 und mit ihrer äußeren Nebenschneide 38 über den Umfang des Bohrerkörpers 10 übersteht. Außerdem sind die Umsetzschneidplatten mit ihren Haupt- und Nebenschneiden so gegenüber dem Bohrerkörper 10 gekippt angeordnet, dass die Hauptschneiden gegenüber einer zur Bohrerachse senkrechten Ebene einen positiven Anstellwinkel αᵢ = 4° bzw. αₐ = 2° einschließen, wobei mit den Indizes i und a die innere bzw. äußere Platte gekennzeichnet sind. Da die Nebenschneide 38 senkrecht zur benachbarten Hauptschneide 34 ausgerichtet ist, ist bei dem gezeigten Ausführungsbeispiel die Nebenschneide 38 von der Plattenecke 36 aus in ihrer Längserstreckung unter einem Anstellwinkel in Richtung Bohrerkörper geneigt, der dem Winkel αₐ entspricht. Aus Fig. 2a ist weiter ersichtlich, dass die Hauptschneide 34 der äußeren Umsetzschneidplatte 22 mit der Hauptschneide 30 der inneren Umsetzschneidplatte 20 in der durch den Pfeil 40 angedeuteten Drehrichtung um die Bohrerachse 32 einen Winkel einschließt, der um den Winkel β kleiner ist als 180°. Bei dem gezeigten Ausführungsbeispiel beträgt der Winkel β etwa 5°. Schließlich ist aus Fig. 2b zu ersehen, dass die Hauptschneide 30 der inneren Umsetzschneidplatte 20 einen vorschneidenden Abstand d vor der Hauptschneide 34 der äußeren Umsetzschneidplatte 22 aufweist, der bei dem gezeigten Ausführungsbeispiel 0,23 mm beträgt. Die Winkel αᵢ,αₐ und β und der vorschneidende Abstand d sind so gewählt, dass der Bohrer mit einer definierten radialen Abdrängkraft im Bereich seiner äußeren Nebenschneide 38 gegen die Wand 42 der erzeugten Bohrung gleitend anliegt.

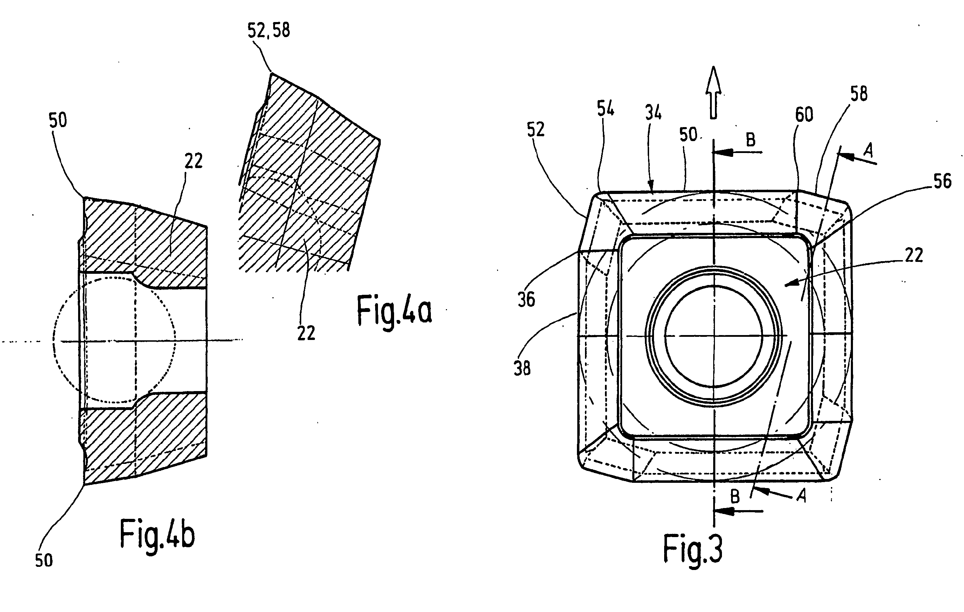

Wie insbesondere aus Fig. 3 in Verbindung mit Fig. 2b zu ersehen ist, sind die Hauptschneiden 34 der Umsetzschneidplatten 22 in ihrer Längserstreckung in eine geradlinige Arbeitspartie 50 und eine daran anschließende, bis zur ersten Plattenecke 36 reichende geradlinige Schälpartie 52 unterteilt, die im Bereich ihrer abgerundeten Übergangsstelle 54 bei dem gezeigten Ausführungsbeispiel einen Winkel von 105° miteinander einschließen. Die Schälpartie 52 der Hauptschneide 34 und die benachbarte Nebenschneide 38 schließen einen Winkel von 165° miteinander ein. An die geradlinige Arbeitspartie 50 einer jeden Hauptschneide 34 schließt sich eine bis zur zweiten Plattenecke 56 reichende Zentralpartie 58 an, die mit der Arbeitspartie einen Pfeilwinkel 60 von 165° einschließt. Die Zentralpartie 58 einer ersten Hauptschneide 34 hat beim Umsetzen auf die nächste Hauptschneide 34 die Funktion einer Schälpartie 52.

Der Unterteilung der Hauptschneide 34 in die Arbeitspartie 50 und die Schälpartie 52 kommt bei der äußeren Schneidplatte 22 eine wichtige und zudem erfindungswesentliche Funktion zu. Es hat sich nämlich gezeigt, dass bei herkömmlicher Verwendung einer Hauptschneide 34 mit zur Nebenschneide 38 hin abgerundeter Plattenecke ohne Schälpartie 52 vor allem beim Durchbohren von duktilen Werkstücken sich eine unerwünschte Gratbildung ergibt. Die Grate müssen in einem zusätzlichen Arbeitsgang abgetragen, beispielsweise abgefeilt werden. Die erfindungsgemäße, an die Arbeitspartie 50 nach außen hin anschließende steil verlaufende geradlinige Schälpartie 52 sorgt dafür, dass das Werkstück im Durchmesserbereich schälend unter Bildung feiner Späne abgetragen wird. Dadurch wird eine Gratbildung wirksam vermieden. Die unter dem Pfeilwinkel zurückspringende Zentralpartie 58 der äußeren Schneidplatte 22 wird von der Hauptschneide 30 der voreilenden inneren Schneidplatte 20 beim Bohrvorgang überlappt und ist dadurch unwirksam gestellt. Dies ist notwendig, damit die Zentralpartie 58, die beim Umsetzen der Schneidplatte 22 auf die nächste Hauptschneide 34 zur Schälpartie 52 wird, beim Bohrvorgang keinem Verschleiß unterliegt.

Grundsätzlich ist es möglich, die gleichen Schneidplatten auch als Innenplatten 20 zu verwenden. In diesem Fall kommt es im Bereich des Pfeilwinkels zwischen Arbeitspartie 50 und Zentralpartie 58 zu einer Spanteilung, die für den Bohrvorgang vorteilhaft ist.

Zusammenfassend ist folgendes festzuhalten: Die Erfindung bezieht sich auf einen Vollbohrer für Werkzeugmaschinen. Der Vollbohrer weist einen Bohrerkörper 10 und zwei in radialem Abstand voneinander in je einem Plattensitz 16,18 des Bohrerkörpers 10 im Bereich einer Spanfördernut 12,14 angeordnete Umsetzschneidplatten 20,22 auf. Die Umsetzschneidplatten 20,22 weisen einen im Wesentlichen quadratischen Umriss auf. Sie stehen mit ihren stirnseitigen Hauptschneiden 30,34 axial über den Bohrerkörper 10 über und überlappen einander radial in ihrem Wirkbereich. Die radial äußere Umsetzschneidplatte 22 steht mit ihrer äußeren Schneidenecke 36 und mit ihrer daran anschließenden, zur betreffenden Hauptschneide 34 senkrechten Nebenschneide 38 radial über den Umfang des Bohrerkörpers über. Um ein gratfreies Durchbohren zu ermöglichen, ist die stirnseitige Hauptschneide 34 der äußeren Schneidplatte 22 in ihrer Längserstreckung in eine radial innen liegende Arbeitspartie 50 und eine daran nach außen anschließende, bis zur äußeren Plattenecke 36 reichende geradlinige Schälpartie 52 unterteilt, die einen Anstellwinkel von 95° bis 120° miteinander einschließen. Im eingebauten Zustand ist demgemäß die Schälpartie 52 zur äußeren Plattenecke 36 hin unter einem positiven Anstellwinkel von 72° bis 87° gegenüber der Stirnfläche des Bohrerkörpers angestellt.

## Patentansprüche

1. Bohrwerkzeug für Werkzeugmaschinen mit einem Bohrerkörper (10) und mindestens zwei in radialem Abstand voneinander in einem Plattensitz (16,18) des Bohrerkörpers (10) im Bereich einer Spanfördernut (12,14) angeordneten, mit ihren stimseitigen Hauptschneiden (30,34) axial über den Bohrerkörper (10) überstehenden und in ihren Wirkbereichen einander radial überlappenden Schneidplatten (20,22), wobei die radial äußere Schneidplatte (22) mit ihrer äußeren Plattenecke (36) und ihrer daran anschließenden Nebenschneide (38) über den Bohrerkörper (10) übersteht und wobei die Nebenschneide (38) von der Plattenecke (36) aus in ihrer Längserstreckung unter einem definierten Anstellwinkel (αₐ) in Richtung Bohrerkörper geneigt ist, **dadurch gekennzeichnet, dass** die stirnseitige Hauptschneide (34) der äußeren Schneidplatte (22) in ihrer Längserstreckung in eine radial innen liegende Arbeitspartie (50) und eine daran nach außen anschließende, bis zur äußeren Plattenecke (36) reichende Schälpartie (52), die einen Winkel von 95° bis 110° miteinander einschließen, unterteilt ist.

2. Bohrwerkzeug nach Anspruch 1, **dadurch gekennzeichnet, dass** die Arbeitspartie (50) der Hauptschneide (34) zur Schälpartie (52) hin unter einem positiven Anstellwinkel von 2° bis 10° gegenüber der Stirnfläche des Bohrerkörpers angestellt ist.

3. Bohrwerkzeug nach Anspruch 1 oder 2, **dadurch gekennzeichnet, dass** die Schälpartie (52) der Hauptschneide (34) zur äußeren Plattenecke hin unter einem positiven Anstellwinkel von 72° bis 87° gegenüber der Stirnfläche des Bohrerkörpers (10) angestellt ist.

4. Bohrwerkzeug nach einem der Ansprüche 1 bis 3, **dadurch gekennzeichnet, dass** die Übergangsstelle (54) zwischen Arbeitspartie (50) und Schälpartie (52) der Hauptschneide (34) konvex abgerundet ist.

5. Bohrwerkzeug nach einem der Ansprüche 1 bis 4, **dadurch gekennzeichnet, dass** die Schälpartie (52) der Hauptschneide (34) und die benachbarte Nebenschneide (38) im Bereich der äußeren Plattenecke (36) einen Winkel von 160° bis 175° miteinander einschließen.

6. Bohrwerkzeug nach einem der Ansprüche 1 bis 5, **dadurch gekennzeichnet, dass** sich an die geradlinige Arbeitspartie (50) der stirnseitigen Hauptschneide (34) radial nach innen hin eine bis zur inneren Plattenecke (56) reichende Zentralpartie (58) anschließt, die mit der Arbeitspartie (50) einen Pfeilwinkel von 160° bis 175° einschließt und die unter einem negativen Anstellwinkel von 3° bis 18° gegenüber der Stirnfläche des Bohrerkörpers (10) angestellt ist.

7. Vollbohrer nach Anspruch 6, **dadurch gekennzeichnet, dass** der Wirkungsbereich der Zentralpartie (58) der stimseitigen Hauptschneide (34) der äußeren Schneidplatte (22) von der stimseitigen Hauptschneide (30) der inneren Schneidplatte (20) überlappt und wirkungslos gestellt ist.

8. Vollbohrer nach einem der Ansprüche 1 bis 7, **dadurch gekennzeichnet, dass** die Schneidplatten (20,22) als Umsetzschneidplatten mit vier gleich langen Hauptschneiden (30,34) ausgebildet sind.

9. Schneidplatte für ein in eine Werkzeugmaschine einsetzbares Bohrwerkzeug mit mindestens einer sich zwischen einer ersten und einer zweiten Plattenecke (36,56) erstreckenden Hauptschneide (30,34) und einer an der ersten Plattenecke (36) anschließenden Nebenschneide (38), **dadurch gekennzeichnet, dass** die Hauptschneide (30,34) in ihrer Längserstreckung in eine geradlinige Arbeitspartie (50) und eine daran anschließende, bis zur ersten Plattenecke (36) reichende geradlinige Schälpartie (52) unterteilt ist, die einen Winkel von 95° bis 110° miteinander einschließen.

10. Schneidplatte nach Anspruch 9, **dadurch gekennzeichnet, dass** die Übergangsstelle zwischen der Arbeitspartie (50) und der Schälpartie (52) der Hauptschneide (30,34) konvex abgerundet ist.

11. Schneidplatte nach Anspruch 9 oder 10, **dadurch gekennzeichnet, dass** die Schälpartie (52) der Hauptschneide (30,34) und die benachbarte Nebenschneide (38) im Bereich der ersten Plattenecke (36) einen Winkel von 160° bis 175° miteinander einschließen.

12. Schneidplatte nach einem der Ansprüche 9 bis 11, **dadurch gekennzeichnet, dass** sich an die geradlinige Arbeitspartie (50) der Hauptschneide (30,34) eine bis zur zweiten Plattenecke (56) reichende Zentralpartie (58) anschließt, die mit der Arbeitspartie (50) einen Pfeilwinkel von 160° bis 175° einschließt.

13. Schneidplatte nach einem der Ansprüche 9 bis 12, **dadurch gekennzeichnet, dass** sie als Umsetzschneidplatte (20,22) mit vier Plattenecken (36) und vier gleichartigen, um 90° gegeneinander versetzten Hauptschneiden (30,34) ausgebildet ist, von denen jeweils der an einer ersten Plattenecke (36) anschließenden Hauptschneide (30,34) zugleich die Funktion der Nebenschneide (38) in Bezug auf die über die betreffende Plattenecke (36) benachbarte Hauptschneide (30,34) zukommt.

## Claims

1. A drilling tool for machine tools, having a drill bit body (10) and at least two inserts (20, 22) which are arranged at a radial distance from one another in an insert seat (16, 18) of the drill bit body (10) in the region of a chip flute (12, 14), project with their front-end main cutting edges (30, 34) axially beyond the drill bit body (10) and radially overlap one another in their active regions, the radially outer insert (22), with its outer insert corner (36) and its adjoining secondary cutting edge (38), projecting beyond the drill bit body (10), and the secondary cutting edge (38), starting from the insert corner (36), being inclined at a defined setting angle (αₐ) in its longitudinal extent in the direction of the drill bit body, **characterized in that** the front-end main cutting edge (34) of the outer insert (22) is subdivided in its longitudinal extent into a radially inner working section (50) and a peeling section (52) adjoining said working section (50) on the outside and extending up to the outer insert corner (36), said sections (50, 52) enclosing an angle of 95° to 110° with one another.

2. The drilling tool as claimed in claim 1, **characterized in that** the working section (50) of the main cutting edge (34), toward the peeling section (52), is set at a positive setting angle of 2° to 10° relative to the end face of the drill bit body.

3. The drilling tool as claimed in claim 1 or 2, **characterized in that** the peeling section (52) of the main cutting edge (34), toward the outer insert corner, is set at a positive setting angle of 72° to 87° relative to the end face of the drill bit body (10).

4. The drilling tool as claimed in one of claims 1 to 3, **characterized in that** the transition point (54) between working section (50) and peeling section (52) of the main cutting edge (34) is rounded off convexly.

5. The drilling tool as claimed in one of claims 1 to 4, **characterized in that**, in the region of the outer insert corner (36), the peeling section (52) of the main cutting edge (34) and the adjacent secondary cutting edge (38) enclose an angle of 160° to 175° with one another.

6. The drilling tool as claimed in one of claims 1 to 5, **characterized in that** a central section (58) extending up to the inner insert corner (56) adjoins the rectilinear working section (50) of the front-end main cutting edge (34) radially on the inside, this central section (58) enclosing a sweepback angle of 160° to 175° with the working section (50) and being set at a negative setting angle of 3° to 18° relative to the end face of the drill bit body (10).

7. The solid drill bit as claimed in claim 6, **characterized in that** the active region of the central section (58) of the front-end main cutting edge (34) of the outer insert (22) is overlapped by the front-end main cutting edge (30) of the inner insert (20) and is rendered ineffective.

8. The solid drill as claimed in one of claims 1 to 7, **characterized in that** the inserts (20, 22) are designed as indexable inserts having four main cutting edges (30, 34) of the same length.

9. An insert for a drilling tool which can be used in a machine tool, having at least one main cutting edge (30, 34), extending between a first and a second insert corner (36, 56), and a secondary cutting edge (38) adjoining the first insert corner (36), **characterized in that** the main cutting edge (30, 34) is subdivided in its longitudinal extent into a rectilinear working section (50) and an adjoining rectilinear peeling section (52) extending up to the first insert corner (36), said sections (50, 52) enclosing an angle of 95° to 110° with one another.

10. The insert as claimed in claim 9, **characterized in that** the transition point between the working section (50) and the peeling section (52) of the main cutting edge (30, 34) is rounded off convexly.

11. The insert as claimed in claim 9 or 10, **characterized in that**, in the region of the first insert corner (36), the peeling section (52) of the main cutting edge (30, 34) and the adjacent secondary cutting edge (38) enclose an angle of 160° to 175° with one another.

12. The insert as claimed in one of claims 9 to 11, **characterized in that** a central section (58) extending up to the second insert corner (56) adjoins the rectilinear working section (50) of the main cutting edge (30, 34), this central section (58) enclosing a sweepback angle of 160° to 175° with the working section (50).

13. The insert as claimed in one of claims 9 to 12, **characterized in that** it is designed as an indexable insert (20, 22) having four insert corners (36) and four identical main cutting edges (30, 34) which are offset from one another by 90° and of which in each case the main cutting edge (30, 34) adjoining a first insert corner (36) at the same time performs the function of the secondary cutting edge (38) with regard to the adjacent main cutting edge (30, 34) via the relevant insert corner (36).

## Revendications

1. Foret pour machines-outils, comprenant une âme (10) et au moins deux plaquettes de coupe (20, 22) qui sont disposées avec un espacement radial réciproque dans un logement de plaquette (16, 18) de l'âme (10), au voisinage d'une goujure (12, 14), font saillie axialement de l'âme (10) avec leurs tranchants principaux frontaux (30, 34) et se recouvrent radialement dans leurs zones actives, la plaquette de coupe extérieure (22) dans la direction radiale dépassant de l'âme (10) avec son coin extérieur (36) et son tranchant secondaire (38) faisant suite à ce dernier, et le tranchant secondaire (38) étant incliné à partir du coin (36) dans la direction longitudinale, en direction de l'âme, selon un angle d'inclinaison défini (αₐ), **caractérisé en ce que** le tranchant principal (34) frontal de la plaquette de coupe extérieure (22) est divisé dans sa direction longitudinale en une partie de travail (50) située à l'intérieur dans la direction radiale et une partie d'écroûtage (52) faisant suite à la précédente vers l'extérieur et s'étendant jusqu'au coin de plaquette extérieur (36), qui forment entre elles un angle compris entre 95° et 110°.

2. Foret selon la revendication 1, **caractérisé en ce que** la partie de travail (50) du tranchant principal (34) est inclinée vers la partie d'écroûtage (52) avec un angle d'inclinaison positif compris entre 2° et 10° par rapport à la surface frontale de l'âme.

3. Foret selon la revendication 1 ou 2, **caractérisé en ce que** la partie d'écroûtage (52) du tranchant principal (34) est inclinée vers le coin de plaquette extérieur avec un angle d'inclinaison positif compris entre 72° et 87° par rapport à la surface frontale de l'âme (10).

4. Foret selon l'une des revendications 1 à 3, **caractérisé en ce que** la transition (54) entre la partie de travail (50) et la partie d'écroûtage (52) du tranchant principal (34) est arrondie de manière convexe.

5. Foret selon l'une des revendications 1 à 4, **caractérisé en ce que** la partie d'écroûtage (52) du tranchant principal (34) et le tranchant secondaire (38) adjacent forment dans la zone du coin de plaquette extérieur (36) un angle compris entre 160° et 175°.

6. Foret selon l'une des revendications 1 à 5, **caractérisé en ce qu'**une partie centrale (58) s'étendant jusqu'au coin de plaquette intérieur (56) fait suite à la partie de travail (50) rectiligne du tranchant principal (34) frontal en étant orientée vers l'intérieur dans la direction radiale, laquelle partie centrale forme avec la partie de travail (50) un angle de flèche compris entre 160° et 175° et est inclinée par rapport à la surface frontale de l'âme (10) avec un angle négatif compris entre 3° et 18°.

7. Foret plein selon la revendication 6, **caractérisé en ce que** la zone d'action de la partie centrale (58) du tranchant principal frontal (34) de la plaquette de coupe extérieure (22) est recouverte par le tranchant principal frontal (30) de la plaquette de coupe intérieure (200) et rendue inactive.

8. Foret plein selon l'une des revendications 1 à 7, **caractérisé en ce que** les plaquettes de coupe (20, 22) sont conçues en tant que plaquettes de coupe utilisables de tous les côtés et dotées de quatre tranchants principaux (30, 34) de même longueur.

9. Plaquette de coupe pour un foret destiné à être utilisé dans une machine-outil, comprenant au moins un tranchant principal (30, 34) s'étendant entre un premier et un second coin de plaquette (36, 56) et un tranchant secondaire (38) faisant suite au premier coin de plaquette (36), **caractérisée en ce que** le tranchant principal (30, 34) est divisé dans son étendue longitudinale en une partie de travail (50) rectiligne et une partie d'écroûtage (52) rectiligne faisant suite à cette dernière et s'étendant jusqu'au premier coin de plaquette (36), qui forment entre elle un angle compris entre 95° et 110°.

10. Plaquette de coupe selon la revendication 9, **caractérisée en ce que** la transition entre la partie de travail (50) et la partie d'écroûtage (52) du tranchant principal (30, 34) est arrondie de manière convexe.

11. Plaquette de coupe selon la revendication 9 ou 10, **caractérisée en ce que** la partie d'écroûtage (52) du tranchant principal (30, 34) et le tranchant secondaire (38) adjacent forment dans la zone du premier coin de plaquette (36) un angle compris entre 160° et 175°.

12. Plaquette de coupe selon l'une des revendications 9 à 11, **caractérisée en ce qu'**une partie centrale (58) s'étendant jusqu'au second coin de plaquette (56) fait suite à la partie de travail (50) rectiligne du tranchant principal (34), et forme avec ladite partie de travail (50) un angle de flèche compris entre 160° et 175°.

13. Plaquette de coupe selon l'une des revendications 9 à 12, **caractérisée en ce qu'**elle est conçue en tant que plaquette de coupe (20, 22) utilisable de tous les côtés et dotée de quatre coins de plaquette (36) et de quatre tranchants principaux (30, 34) identiques décalés de 90° les uns par rapport aux autres, dont celui (30, 34) faisant chaque fois suite à un premier coin de plaquette (36) assure simultanément la fonction de tranchant secondaire (38) par rapport au tranchant principal (30, 34) adjacent via le coin de plaquette (36) considéré.
